# EUROPÄISCHE PATENTSCHRIFT

(11) **EP 4 235 010 B1**
(45) Veröffentlichungstag und Bekanntmachung des Hinweises auf die Patenterteilung: **12.03.2025**
(21) Anmeldenummer: 23157276.9
(22) Anmeldetag: 17.02.2023
(51) Int. Cl.: F16L 55/165, F16L 55/179, F16L 101/18, F16L 101/30

(54) **PACKER FÜR DIE ROHR- UND KANALSANIERUNG**
PACKER FOR TUBE AND CHANNEL REMEDIATION
PACKER POUR LA RÉHABILITATION DE TUYAUX ET DE CANALISATIONS

(30) Priorität: 24.02.2022 DE 102022104411
(43) Veröffentlichungstag der Anmeldung: 30.08.2023
(73) Patentinhaber: Meier, Dieter, 90763 Fürth (DE)
(72) Erfinder: Meier, Dieter, 90763 Fürth (DE)
(74) Vertreter: Lindner Blaumeier Patent- und Rechtsanwälte

(56) Entgegenhaltungen:
- DE-A1- 10 251 823
- DE-C1- 19 910 522
- US-A- 5 791 255
- US-A1- 2011 259 460
- US-B1- 6 279 485

## Beschreibung

Die Erfindung betrifft einen Packer für die Rohr- und Kanalsanierung, aufweisend einen vorderen und einen hinteren Flansch, zwischen denen eine mit einem Druckmittel befüllbare, dehnbare Hülle angeordnet ist.

Packer für die Sanierung von Rohrleitungen und Kanälen sind im Stand der Technik bereits bekannt und bestehen zumeist aus einer dehnbaren Hülle, die an beiden Enden verschlossen ist. An einer hinteren Seite ist dabei meist ein Anschluss für Luft oder Wasser als Druckmittel vorgesehen, wobei zur Bewegung, beispielsweise an beiden Seiten, Zugösen verwendet werden können. Der Packer wird mit einem Laminat/Liner umwickelt und in die zu sanierende Leitung eingebracht. Das Laminat besteht üblicherweise aus einem Glasfasergewebe oder einer Glasfasermatte, das bzw. die mit einem Kunstharz getränkt worden ist. Nachdem der Packer mit dem Laminat an die zu sanierende Stelle in dem Kanal oder der Rohrleitung eingebracht worden ist, wird er mit dem Druckmittel befüllt, wobei er sich ausdehnt und das Laminat an die schadhafte Stelle der Rohrwandung presst. Nach dem Aushärten wird das Druckmittel abgelassen und der Packer, beispielsweise mittels der Zugöse, wieder herausgezogen. Zur Positionierung wird dabei häufig ein zweiseitiger Zugang ausgenutzt.

Um auch Rohr- oder Kanalleitungen sanieren zu können, die Bögen aufweisen und/oder nur von einer Seite aus zugänglich sind, schlägt DE 10 2006 034 652 A1 einen Packer für die Rohr- und Kanalsanierung vor, bei dem wenigstens ein Flansch eine Durchgangsöffnung aufweist, die mit einem im Inneren der Hülle angeordneten und demgegenüber abgedichteten Hohlkörper verbunden ist, der sich bis zu dem entgegengesetzten Flansch erstreckt, wo ein Sackloch oder eine zumindest teilweise einen geringeren Durchmesser aufweisende Durchgangsöffnung vorliegen kann. Beim Einschieben des Packers in das zu sanierende Rohr oder den zu sanierenden Kanal kann ein stabförmiger Gegenstand verwendet werden, der so weit durch die Durchgangsöffnung in dem ersten Flansch geschoben wird, bis er eine Druckkraft auf den zweiten, während des Einschiebens vorderen Flansch ausübt. Auf diese Weise wird der Packer auch beim Einschieben gezogen, ein Knicken ist nicht mehr möglich. Mittels einer Zugöse kann der Packer nach dem Einbringen des Laminates wieder herausgezogen werden.

Problematisch bei derartigen Sanierungsvorgängen sind zum einen Abbiegevorgänge bei Abzweigungen, wozu beispielsweise in DE 10 2008 021 956 A1 vorgeschlagen wurde, den gesamten Packer mittels einer inneren Seele zu verformen. Zum anderen ist es aber auch schwierig, den Packer an der richtigen Stelle innerhalb des zu sanierenden Rohr- und/oder Kanalsystems zu platzieren. Hierzu wird häufig nach einer Längenmessung eine entsprechende Vorschub- oder Zugstrecke realisiert.

Es besteht mithin ein Bedarf nach einer verbesserten Positionierbarkeit des Packers und der Schaffung einer Möglichkeit, den Packer in eine Abzweigung zu führen, beispielsweise von einer Grundleitung in einen Zulauf.

DE 199 10 522 C1 offenbart einen Packer. Der Packer besteht aus einem konzentrischen Doppelrohr, auf dem die übrigen Teile des Packers montiert sind. Der Zwischenraum zwischen dem inneren Rohr und dem äußeren Rohr dient der Fluidverteilung. Das Fluid wird über einen Rohranschluß dem Packer zugeführt. Die axial äußere Begrenzung der sonstigen Packerteile wird durch zwei umlaufende Stege gebildet. Zwischen den beiden Stegen erstreckt sich ein schlauchförmiges Packergebilde. Das innere Rohr kann über den eigentlichen Packerbereich hinaus verlängert sein und bietet sich für die Unterbringung von Kabeln für Kamera und Steuerung an.

DE 102 51 823 A1 betrifft ein Gerät zur Dichtheitsprüfung und/oder optischen Inspektion von Rohrabschnitten, insbesondere von Rohrverbindungen. Das Gerät weist zwei aufblähbare und ausbiegbare Abdichtmodule, mithin Packer, auf. Zwischen den Abdichtmodulen und/oder in das vordere Abdichtmodul integriert können Kameras vorgesehen sein. Das vordere Abdichtmodul ist ferngesteuert mittels eines im Inneren angeordneten Lenkmechanismus nach allen Richtungen auslenkbar, so dass das Gerät unter Beobachtung mit der Stirnkamera in einen Abzweig hineingelenkt werden kann, wobei sich das vorlaufende Abdichtmodul ferngesteuert entsprechend ausbiegt.

US 2011/0259460 A1 betrifft einen Fräsroboter mit einem schwenkbaren Fräskopf, der vorne an einem zum Sichern der Position vorgesehenen Gummiballon angeordnet ist. Außerhalb des zum Schwenken vorgesehenen Roboterarms kann eine Kette vorgesehen werden, die zum einen am Flansch, zum anderen am Flansch befestigt ist und somit bei Füllung des Schlauchs mit Druckmittel eine Biegung verursacht.

Der Erfindung liegt die Aufgabe zugrunde, einen Packer anzugeben, der hinsichtlich der Überwachung eines Sanierungsvorgangs und der Positionierbarkeit verbessert ist und insbesondere ein Abbiegen in Abzweigungen erlaubt.

Zur Lösung dieser Aufgabe ist ein Packer mit den Merkmalen des Anspruchs 1 vorgesehen. Bei einem Packer der eingangs genannten Art ist vorgesehen, dass der hintere und der vordere Flansch durch ein hohles Durchführelement innerhalb der Hülle, gegen diese abgedichtet, verbundene Durchführungsöffnungen aufweisen, durch die eine Zuleitung zu einer an die Durchführungsöffnung des vorderen Flansches anschließend angeordneten Kameraanordnung mit einer Kamera geführt ist. Dabei weist die Kameraanordnung ein in radialer Richtung biegbares Verlängerungselement auf, an dessen vorderen Ende die Kamera angeordnet ist, wobei dem Verlängerungselement eine Verstelleinrichtung zur Einstellung von dessen radialer Verbiegung zugeordnet ist.

Es wird mithin vorgeschlagen, eine dem vorderen Flansch vorlaufende Kamera an dem Packer anzubringen, die es ermöglicht, den Bewegungsweg des Packers zu überwachen und insbesondere auch die korrekte Stelle, die saniert werden soll, aufzufinden und den Packer verbessert zu positionieren. Die Zuleitung zu der Kameraanordnung, welche die Kabelverbindungen für die Kamera umfasst, wird dabei - die sonstige Nutzung des Packers nicht behindernd - durch das Innere der Hülle geführt, wobei das Durchführelement, welches als Hohlkörper ausgebildet ist, einen Schutz bietet. Die Zuleitung umfasst bevorzugt einen Röhrenaal, in dem Kabelverbindungen geführt sein können. Das Durchführelement kann hierbei insbesondere einen mehrfachen Zweck aufweisen. So kann vorgesehen sein, dass die Steifigkeit des hohlen Durchführelements so gewählt ist, dass der Abstand der beiden Flansche bei Bewegung und/oder Befüllung mit dem Druckmittel zumindest im Wesentlichen konstant bleibt. So verhindert das sich zwischen den beiden Flanschen erstreckende Durchführelement auch, dass es beim Bewegen des Packers zu einem Knicken oder sonstiger ungewollter Längenverkürzung, die zu einem Verkleben des Laminats führen könnte, kommt. Zusätzlich oder alternativ kann das hohle Durchführelement in radialer Richtung biegbar sein, um das Durchführen durch Bögen und/oder Abzweigungen zu vereinfachen. Beispielsweise kann das Durchführelement entsprechend dem Hohlkörper der eingangs zitierten DE 10 2006 034 652 A1 ausgebildet sein.

Insbesondere in diesem Kontext, aber auch allgemein, ist es zweckmäßig, wenn die Durchführungsöffnungen und somit auch das Durchführelement hinsichtlich der Längsrichtung des Packers zentral angeordnet sind. Hinsichtlich der Stabilisierung und der noch zu erläuternden Verstellmöglichkeit ist eine zentrale Anordnung besonders vorteilhaft. Ferner kann bei einer derartigen Ausgestaltung auch die Kameraanordnung zentral an dem vorderen Flansch angeordnet werden.

Im Rahmen der vorliegenden Erfindung sind jedoch auch Ausgestaltungen denkbar, in denen das Durchführelement zumindest nicht vollständig zentral verläuft. Beispielsweise kann ein zweckmäßiges Ausführungsbeispiel vorsehen, dass die Durchführungsöffnung des vorderen Flansches, insbesondere zur zentralen Anbringung der Kameraanordnung, zentral in dem Flansch vorgesehen ist, während die Durchführungsöffnung des hinteren Flansches dezentral vorgesehen ist und das Durchführelement die Durchführungsöffnungen geradlinig verbindet. Dies kann dann zweckmäßig sein, wenn ein eher am Rand gelegener Eintritt der Zuleitung in den Packer bevorzugt ist, beispielsweise ein zentraler Punkt am hinteren Ende als Angriffspunkt zum Drehen und Schieben des Packers gewünscht ist.

Erfindungsgemäß ist vorgesehen, dass die Kameraanordnung ein in radialer Richtung biegbares Verlängerungselement aufweist, an dessen vorderen Ende die Kamera angeordnet ist, wobei dem Verlängerungselement eine Verstelleinrichtung zur Einstellung von dessen radialer Verbiegung zugeordnet ist. Eine derartige Verstellung der Kamera, die das vordere Ende des Packers bildet, aus der Ausrichtung in der Längsrichtung ist nicht nur dahingehend nützlich, dass eine verbesserte Wahrnehmung der Umgebung, also des Inneren des Rohr- und/oder Kanalsystems, mit einstellbaren Blickwinkeln ermöglicht wird, sondern es kann bei hinreichend langer Ausgestaltung des Verlängerungselements auch eine Bewegungshilfe, insbesondere im Bereich von Abzweigungen im Rohr- und/oder Kanalsystem, erreicht werden. So ist es beispielsweise denkbar, zunächst durch Verschwenken der Kamera mittels der Verstelleinrichtung in eine Abzweigung, beispielsweise einen Zulauf von einer Grundleitung, hineinzusehen, beispielsweise dahingehend, ob die richtige Abzweigung vorliegt. Danach, wenn die Kameraanordnung so weit gebogen werden kann, dass sie in die Abzweigung hineinragt, wird der Packer automatisch in diese derart vorgewählte Abzweigung hineinbewegt. Auf diese Weise dient die Kameraanordnung einem doppelten Zweck, einmal als Orientierungs- und Überwachungshilfe und einmal als Navigationshilfe. Doch nicht nur bezüglich des Abbiegens in Abzweigungen ist diese Ausgestaltung nützlich, sondern es liegt auch eine erhebliche Vereinfachung beim Durchfahren von Rohrbögen bzw. allgemein Leitungsbögen vor. Die Ausgestaltung der Kameraanordnung und des Verlängerungselements kann, insbesondere hinsichtlich ihrer Dimensionen, so gewählt sein, dass die Kamera den vorderen Flansch und/oder die Hülle des Packers erfassen kann und so beispielsweise das Einbringen des Laminats überwachen kann. Insbesondere kann also eine Drehung der Kamera bis zu 180° erreicht werden, so dass sie nach hinten blickt.

In besonders vorteilhafter Ausgestaltung der Erfindung kann mithin vorgesehen sein, dass die Kameraanordnung mit der Verstelleinrichtung als Teil einer Führungseinrichtung zum Führen des Packers in eine Abzweigung ausgebildet ist und/oder die Verstelleinrichtung, insbesondere durch Wahl der Länge und/oder radialen Biegbarkeit des Verlängerungselements, derart ausgebildet ist, dass die Kamera weiter als der Radius einer Leitung, in der der Packer bewegt wird, radial verschwenkbar ist, insbesondere in die Abzweigung von der Leitung hinein.

Derartige Kameraanordnungen mit einem biegbaren Verlängerungselement sind für andere Anwendungen bereits grundsätzlich erwerblich und können kostengünstig und aufwandsarm auch im Rahmen der vorliegenden Erfindung eingesetzt werden.

Es ist eine einzige Packer-Hauptanordnung, die durch den vorderen Flansch, den hinteren Flansch und die Hülle gebildet wird, vorgesehen. Mit anderen Worten umfasst der Packer genau einen vorderen Flansch, genau einen hinteren Flansch und genau eine Hülle.

Während es grundsätzlich auf nicht erfindungsgemäße Art und Weise denkbar ist, einen Verstellungsmotor oder sonstigen steuerbaren Verstellungsaktor in der Verstelleinrichtung zu verwenden, der mittels der Zuleitung und weitergeführter Kabelverbindungen von außerhalb des Rohr- und/oder Kanalsystems bedient und gesteuert werden kann, wird erfindungsgemäß eine einfach umsetzbare, mechanische bzw. manuelle Verstellung verwendet.

So sieht die Erfindung vor, dass die Zuleitung verschiebbar in dem Durchführelement gelagert ist und die Verstelleinrichtung ein Befestigungsmittel aufweist, das eine erste Befestigungsstelle, die von dem vorderen Flansch beanstandet, insbesondere am vorderen Ende des Verlängerungselements angeordnet, ist, mit einer zweiten Befestigungsstelle, die von der Durchgangsöffnung des vorderen Flanschs radial beabstandet ist, verbindet. Insbesondere ist die Ausgestaltung also derart, dass bei einem Verschieben der Zuleitung und damit der Kameraanordnung gegen den vorderen Flansch aufgrund des nicht elastischen, aber flexiblen Befestigungsmittels eine Radialverstellung des Verlängerungselements und damit der Kamera erfolgt. Die am Ende der Zuleitung anschließende Kameraanordnung ist mithin nicht direkt am vorderen Flansch befestigt, sondern mittels des Befestigungsmittels an einem entfernteren Punkt an diesen gekoppelt. Im Grundzustand ist das Verlängerungselement gänzlich in Längsrichtung ausgerichtet und über das Befestigungsmittel schräg dazu an den vorderen Flansch gekoppelt. Wird nun die Zuleitung und damit die Kameraanordnung nach vorne geschoben, wird, nachdem das Befestigungsmittel nicht längenveränderlich ist, das Verlängerungselement in die Richtung zu der zweiten Befestigungsstelle gebogen. Zweckmäßig kann hierbei in dem Grundzustand die Kameraanordnung an dem vorderen Flansch anliegen und/oder zumindest der durch die Durchführungsöffnung des vorderen Flanschs schiebbare Teil der Zuleitung steif ausgebildet sein. Ein Zurückziehen der Zuleitung und damit der Kameraanordnung führt die Ausrichtung ebenso kontinuierlich in die Längsrichtung zurück. Zweckmäßig existiert, insbesondere der Durchführungsöffnung des hinteren Flanschs nachlaufend, auch eine Arretierungsvorrichtung, die eine maximale Vorschiebestrecke definiert. Hierbei kann es sich beispielsweise um eine um die Fortführung der Zuleitung außerhalb der Hülle gelegte Schelle oder dergleichen handeln. Es sind jedoch auch andere Ausgestaltungen denkbar, um die zulässige Verschiebestrecke, insbesondere Vorschubstrecke, zu begrenzen. Bei dem Befestigungsmittel handelt es sich um einen Draht, der beispielsweise mittels Ösen oder anderen Fixierungsmitteln an der ersten und der zweiten Befestigungsstelle befestigt sein kann und/oder um einen reißfesten Faden, beispielsweise einen Perlonfaden.

Dabei sei bereits an dieser Stelle angemerkt, dass ein Verbiegen des Verlängerungselements in einer vorgegebenen Richtung bezüglich des Packers, wie es bei Ankopplung mittels des Befestigungsmittels entsteht, dennoch Einblick in alle denkbaren radialen Richtungen ermöglichen. Denn durch eine Drehung des Packers insgesamt können alle Richtungen durch die Kamera eingesehen werden. Entsprechende Bedienmöglichkeiten, idealerweise kombiniert mit einem Vorschub und/oder Rückzug des Packers insgesamt, werden im Folgenden noch genauer erläutert.

Das Verlängerungselement kann bevorzugt eine dicht gewickelte Feder mit aneinander anschließenden Wicklungen umfassen, insbesondere aus einem Metall wie rostfreiem Edelstahl. Gegebenenfalls kann dabei eine Rückstellkraft in den Grundzustand in der Längsrichtung vorliegen, was bei einer manuellmechanischen Betätigung durch Schieben besonders vorteilhaft sein kann. Es sind jedoch auch andere Ausgestaltungen denkbar, die bei hinreichender Biegesteifigkeit zur Beibehaltung einer Biegestellung dennoch eine Verstellung mittels der Verstelleinrichtung erlauben. Beispielsweise kann das Verlängerungselement einen Silikonschlauch umfassen.

In diesem Kontext ist es ferner vorteilhaft, wenn die Kameraanordnung einen Kamerakopf mit der Kamera aufweist, der an seinen Kanten zumindest im Wesentlichen rund ausgebildet ist, um ein Führen um Ecken/in Abzweigungen weiter zu begünstigen. Beispielsweise kann eine im Wesentlichen kugelförmige Ausgestaltung gewählt werden.

Vorzugsweise kann die Zuleitung zu einem distalen Bedienabschnitt, welcher zumindest teilweise außerhalb des Rohrs oder Kanals anzuordnen ist, verlängert sein. Insbesondere bei manuell-mechanischer Bewegung durch Verschieben der Zuleitung und damit auch der Kameraanordnung ist dann eine einfache Handhabung von außerhalb des Rohr- und/oder Kanalsystems gegeben, insbesondere gemeinsam mit einer zweiten Bedienmöglichkeit zum Drehen des Packers und/oder Vorschub/Rückzug des Packers. Die Verlängerung kann beispielsweise anhand eines Schiebegestänges oder dergleichen erfolgen.

Der Packer weist bevorzugt auch ein Ankopplungsmittel an dem hinteren Flansch auf, über das ein Gestänge oder dergleichen ankoppelbar ist, um eine Verdrehung des Packers und/oder einen Vorschub und/oder Rückzug des Packers zu ermöglichen. Entsprechende ankoppelbare Bedienmittel und Gestänge sind im Stand der Technik bereits bekannt. Das Bedienmittel befindet sich dann wenigstens teilweise außerhalb des Rohr- und/oder Kanalsystems, insbesondere benachbart zu dem insbesondere zum Verschieben ausgebildeten Bedienabschnitt der Verlängerung der Zuleitung. Mit dem Bedienabschnitt kann durch Schieben der Kameraanordnung die Ausrichtung der Kamera zur Längsrichtung eingestellt werden, um dann beispielsweise durch Verdrehen mittels des Bedienmittels die Richtung einzustellen. Auch kann über das Bedienmittel ebenso mechanisch und aufwandsarm der Vorschub und Rückzug im Rohr- und/oder Kanalsystem bewirkt werden.

Vorzugsweise kann an dem hinteren Flansch ein Druckmittelanschluss für das Druckmittel vorgesehen sein, die das Ankopplungsmittel zum Ankoppeln des zumindest zur Verdrehung des Packers zu verwendenden Bedienmittels aufweist.

Hierbei kann ein Bedienmittel verwendet werden, welches auch die Zufuhr und den Abfluss des Druckmittels erlaubt, um mehrere Funktionen zu verbinden. Die Ankopplung erfolgt dann derart, dass der Packer mit dem Bedienmittel drehgekoppelt ist. Das Ankopplungsmittel kann dann beispielsweise ein Drehgestängeanschluss, ggf. ein Dreh- und Schubgestängeanschluss, sein.

Kurz zusammengefasst sehen also bevorzugte Ausführungsbeispiele des erfindungsgemäßen Packers vor, eine Kameraanordnung am vorderen Ende des Packers anzubringen. Diese kann über einen Röhrenaal o.ä. als Zuleitung mit Strom versorgt und vor- und rückwärts geschoben werden. Um ein Abbiegen der Kamera zu ermöglichen, wird bevorzugt vom Kamerakopf zum Packerkopf (vorderer Flansch) eine flexible Verbindung (Draht, Seil, Faden (insbesondere Perlonfaden),o.ä. als Befestigungsmittel) hergestellt. Um die Kameraanordnung zu steuern, wird die Zuleitung, insbesondere der Röhrenaal, nach vorne bzw. hinten bewegt. Der Spielraum dieser Bewegungsfreiheit kann mittels einer Arretierung am vorderen Ende und der Steckverbindung oder Arretierung am hinteren Ende des Röhrenaals begrenzt werden. Um in eine Abzweigung, insbesondere einen Zulauf, abzubiegen, kann die Kameraanordnung und/oder der Packer nach links oder rechts gelenkt werden. Dies kann auch durch das Drehen des Packers mittels Schiebestange oder Ähnlichem erfolgen. Das Durchfahren von Rohrbögen wird durch die Lenkbarkeit der Kameraanordnung deutlich verbessert. Um das Abbiegen des Packers in sämtliche Richtungen zu ermöglichen, kann der Packer über die Schiebestangen zur Luftzufuhr gedreht werden.

Die Zuleitung kann einen Kabelverbindungen zu der Kamera umfassenden, insbesondere die Längsdehnung des Packers begrenzenden, Fiberglasstab innerhalb des Durchführelements aufweisen. Derartige Fiberglasstäbe mit integrierten Kabelverbindungen sind bereits bekannt und äußerst robust, somit für den Einsatz in dem Packer besonders geeignet. Sie können zur Begrenzung der Längsausdehnung des Packers dienen. Beispielsweise kann der Fiberglasstab durch Steckverbindungen mit einer zum hinteren Flansch und/oder zum vorderen Flansch anschließenden Versorgungsleitung der Zuleitung verbunden sein. Insbesondere dann, wenn weitere Kabelverbindungen, beispielsweise zu LEDs einer Aushärtungseinrichtung, vorhanden sein sollen, wird ein 6-poliger Verbinder bevorzugt.

Mit besonderem Vorteil kann vorgesehen sein, dass innerhalb der transparenten Hülle, insbesondere an dem Durchführelement, wenigstens eine UV-Lichtquelle einer Aushärtungseinrichtung angeordnet ist, die über Kabelverbindungen innerhalb der Zuleitung betreibbar ist. Ist die Hülle des Packers transparent, können innerhalb des Packers Lichtquellen, insbesondere UV-LEDs, angebracht werden, die ein schnelles Aushärten durch UV-Strahlen ermöglichen.

Es wird besonders bevorzugt, dass die Hülle des Packers, die auch als Blähschlauch bezeichnet werden kann, aus einem gewebelosen Material besteht. Alternativ kann die Hülle auch ganz oder teilweise gewebeverstärkt sein, je nach Material und Ausführung.

Es kann ferner vorgesehen sein, dass der Packer eine sich im Inneren des Packers zwischen den beiden Flanschen erstreckende Durchgangsöffnung für Flüssigkeiten des Rohr- und/oder Kanalsystems, insbesondere Abwasser, aufweist. Während des Sanierungsvorgangs kann dann die Flüssigkeit durch diese Durchgangsöffnung abfließen, ein aufwändiges Absperren und Abpumpen und gegebenenfalls eine Umleitung der Flüssigkeit ist nicht erforderlich.

Bei dem erfindungsgemäßen Packer kann ferner vorgesehen sein, dass wenigstens ein Flansch an seiner Innenseite einen konischen, zur Innenseite des Packers gerichteten Abschnitt aufweist, an dessen Außenseite ein Haltering angebracht oder anbringbar ist. Vorzugsweise weisen beide Flansche einen derartigen konischen Abschnitt auf. Der bzw. die Halteringe pressen die Hülle des Packers gegen den konischen Abschnitt, sodass sich eine besonders gute Abdichtung ergibt, wenn die Hülle mit dem Druckmittel befüllt ist. Je stärker der Innendruck in der Hülle ist, desto stärker wird auch die Hülle gegen den konischen Abschnitt gedrückt.

Eine Rohr- und/oder Kanalsanierungsanordnung mit dem erfindungsgemäßen Packer kann beispielsweise ferner noch eine, insbesondere an einer Bedienanordnung mit dem Bedienmittel und/oder dem Bedienabschnitt angeordnete, Ausgabeeinrichtung für Bilder der Kamera, insbesondere ein Display und/oder einen Monitor, aufweisen. Mittels der verlängerten Zuleitung, die die Kabelverbindungen zu der Kamera enthält, lassen sich Bilddaten der Kamera nach außen übertragen und auf der Ausgabeeinrichtung darstellen. In einem Verfahren zum Bewegen eines erfindungsgemäßen Packers in einem Rohr- und/oder Kanalsystem wird der Bewegungsweg, insbesondere auch das Erreichen des Bewegungsziels, des Packers mittels der Kamera überwacht. Der Bewegungsweg kann insbesondere, wenn eine Verstelleinrichtung vorgesehen ist, mittels einer Verstellung der Kameraanordnung durch die Verstelleinrichtung vorgegeben werden.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erstes Ausführungsbeispiel eines erfindungsgemäßen Packers in einem Grundzustand,
- Fig. 2: das erste Ausführungsbeispiel in einem Zustand geänderter Ausrichtung der Kamera,
- Fig. 3: ein zweites Ausführungsbeispiel eines erfindungsgemäßen Packers, und
- Fig. 4: eine Prinzipskizze einer Rohr- und/oder Kanalsanierungsanordnung.

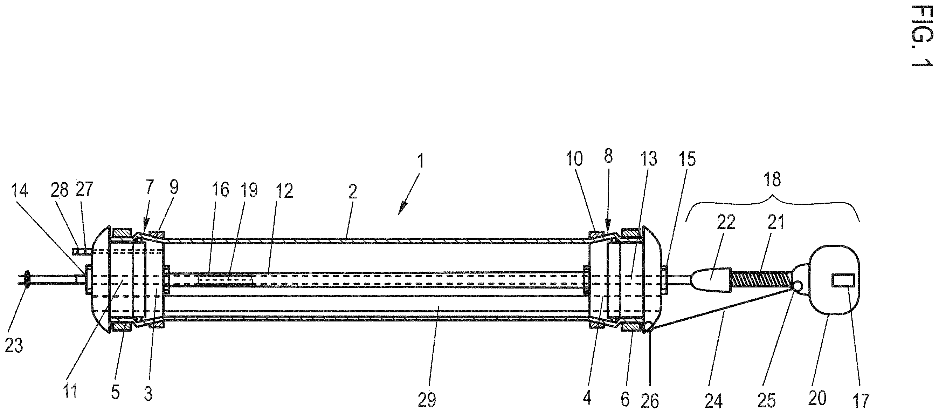

Fig. 1 zeigt einen erfindungsgemäßen Packer 1. Der Packer 1 umfasst genau eine als Außenmantel dienende Hülle 2 als Blähschlauch, die schlauchförmig ausgebildet ist und aus einem dehnbaren gewebelosen oder wenigstens teilweise gewebeverstärkten Material besteht. An beiden Endabschnitten der Hülle 2 ist jeweils ein genau ein Flansch 3, 4 angeordnet, wobei die Hülle 2 mittels Spannringen 5, 6 fest mit den Flanschen 3, 4 verbunden ist. Die Flansche 3, 4 weisen jeweils eine nicht näher gezeigte, umlaufende Nut, um ein Abrutschen der Hülle 2 zu vermeiden, und ferner an ihrer Innenseite einen konischen Abschnitt 7, 8 auf, an dem die Hülle 2 anliegt. Außenseitig ist an dieser Stelle jeweils eine Schelle 9, 10 angebracht.

Der in Fig. 1 links dargestellte, hintere Flansch 3 weist eine axiale Durchführungsöffnung 11 auf, die im Inneren des Packers 1 in ein zylinderförmiges, hohles Durchführelement 12 übergeht. An dem anderen Ende des Durchführelements 12 schließt sich in dem vorderen Flansch 4 eine Durchgangsöffnung 13 an, die vorliegend denselben Durchmesser wie die Durchgangsöffnung 11 in dem hinteren Flansch 3 aufweist. An den Außenseiten der Flansche 3, 4 kann jeweils ein Bund 14, 15 vorhanden sein.

Die durch die Durchführungsöffnungen 11, 13 und das Durchführelement 12 gebildete Durchführung wird genutzt, um eine Zuleitung 16 zu einer Kamera 17 einer Kameraanordnung 18 verschiebbar zu führen. Die Zuleitung 16 enthält dabei insbesondere die Kabelverbindungen 19 zu der Kamera 17, beispielsweise zwei Drähte für die Stromzuführung und einen Draht für die Übertragung der Bilddaten und/oder Steuerung der Kamera 17. Sie kann ferner auch Kabelverbindungen zu innerhalb der dann transparenten Hülle 2 angeordneten UV-LEDs (nicht dargestellt) einer Aushärtungseinrichtung enthalten.

Die Kameraanordnung 18 umfasst einen Kamerakopf 20 mit stark gerundeten Kanten, der zentral und bevorzugt zurückgesetzt die Kamera 17 enthält, welche in dem in Fig. 1 gezeigten Grundzustand nach vorne entlang der Längsrichtung ausgerichtet ist. Zudem kann auch ein über die Zuleitung betreibbares Leuchtmittel enthalten sein, um den Sichtbereich der Kamera 17 auszuleuchten. Der Kamerakopf 20, der beispielsweise aus Kunststoff oder Metall bestehen kann, ist über ein Verlängerungselement 21, hier eine eng gewickelte Metallfeder, deren Windungen aneinander anliegen, und ein Verbindungselement 22 mit der Zuleitung 16 verbunden. Das Verlängerungselement 21 ist biegbar ausgestaltet. Auch wenn in Fig. 1 der Grundzustand mit geradeaus gerichteter Kamera 17 derart gezeigt ist, dass ein Teil der Zuleitung 16 aus der Durchführungsöffnung 13 ausragt, sind doch auch bevorzugte Ausgestaltungen möglich, in denen das Verbindungselement 22, dessen Durchmesser größer als der der Durchführungsöffnung 13 ist, direkt an der Durchführungsöffnung 13 anliegt. In beiden Fällen bildet es eine Begrenzung für eine Schiebestrecke der Zuleitung 16, die vom hinteren Ende zu einem Bedienabschnitt außerhalb des Rohr- und/oder Kanalsystems verlängert sein kann. Entlang dieser in Fig. 1 auch angedeuteten Verlängerung kann eine weitere Begrenzung mittels einer Schelle 23 oder dergleichen vorgesehen sein.

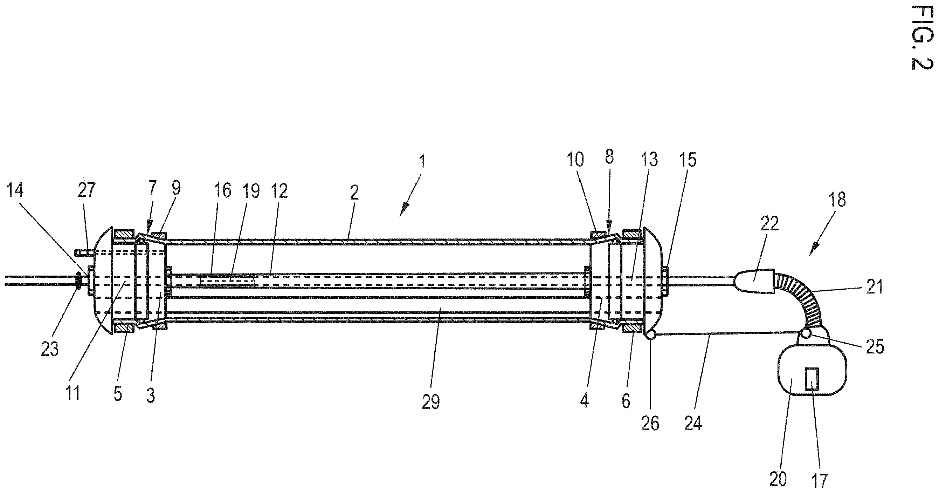

Mittels eines Befestigungsmittels 24, hier einem Draht und/oder einem Faden, insbesondere Perlonfaden, ist die Kameraanordnung 18 an den vorderen Flansch 4 angekoppelt, und zwar zwischen einer ersten Befestigungsstelle 25 am bzw. benachbart dem vorderen Ende des Verlängerungselements 21, insbesondere am Kamerakopf 20, und einer zweiten Befestigungsstelle 26 am radial äußeren Rand der hinteren Seite des vorderen Flanschs 4. Aufgrund dieser Ankopplung biegt sich bei einem Herausschieben der Zuleitung 16, wie in Fig. 2 gezeigt, das Verlängerungselement 21 zur Seite der zweiten Befestigungsstelle 26, so dass die Ausrichtung der Kamera 17 sich ändert, konkret die Kamera 17 zur Seite geschwenkt wird.

Nachdem die Länge der Kameraanordnung 18 in diesem Ausführungsbeispiel 20 cm beträgt, kann der Kamerakopf 20 so auch in abzweigende Leitungen hineingeschwenkt werden und führt, bei Halten in einer solchen Stellung, den gesamten Packer 1 hinein. Dies wird durch die abgerundeten Kanten des Kamerakopfs 20 vereinfacht.

Der Packer 1 weist ferner auch einen Druckmittelanschluss 27 auf, um Druckmittel in die Hülle zuzuführen. Der Druckmittelanschluss ist vorliegend auch mit einem Ankopplungsmittel 28 versehen, hier einem Dreh- und Schubgestängeanschluss, um ein Dreh- und Schubgestänge anzuschließen, welches ebenso nach außerhalb des Rohr- und Kanalsystems führt, um ein Bedienmittel zu bilden, um den Packer 1 zu drehen und zu schieben/zurückzuziehen. Durch Drehen des Packers 1 können verschiedene Blickrichtungen der Kamera 17 eingestellt werden.

Auf diese Weise kann also der Bewegungsweg des Packers 1 in dem Rohr- und Kanalsystem überwacht werden und die zu sanierende Stelle kann verlässlich aufgefunden werden. Zudem erleichtert die verstellbare Kameraanordnung 18 auch die Navigation, wie beschrieben, sowohl bezüglich Abzweigungen als auch bezüglich zu durchfahrener Bögen. Insbesondere kann das Durchführelement 12 auch so ausgestaltet werden, dass es im Inneren der Hülle 2 radial gebogen werden kann, hierbei aber aufgrund seiner Steifigkeit den Abstand zwischen den Flanschen 3,4 aufrechterhält. So können auf einfache Weise auch Bögen durchfahren werden, insbesondere ohne Verknicken.

Nach dem Erreichen der zu sanierenden Stelle wird ein Druckmittel wie Luft oder Wasser über einen Druckmittelanschluss 27 in das Innere der Hülle 2 eingefüllt, wodurch ein auf die Hülle 2 gewickeltes, in den Figuren nicht dargestelltes Laminat an die Rohr- und/oder Kanalwandung gepresst wird. Das Laminat ist mit einem Kunstharz oder einem ähnlichen Material getränkt, das durch Wärmezufuhr, insbesondere mittels der UV-LEDs, oder nach einer vorgegebenen Zeit aushärtet. Nach dem Ende des Aushärtevorgangs wird das Druckmittel abgelassen und der Packer 1 mittels des an dem Druckmittelanschluss 27 angekoppelten Gestänges wieder zurückgezogen. Mit dem Packer 1 können auch solche Leitungen und Kanäle saniert werden, die nur von einer Seite aus zugänglich sind.

Damit während des Sanierungsvorgangs gegebenenfalls anfallende Abwässer bzw. sonstige Flüssigkeiten abfließen können, weist der Packer 1 eine axiale Durchgangsöffnung 29 für Abwässer auf, die - wie im Übrigen auch die Durchführung - gegenüber dem Inneren der Hülle 2 abgedichtet ist.

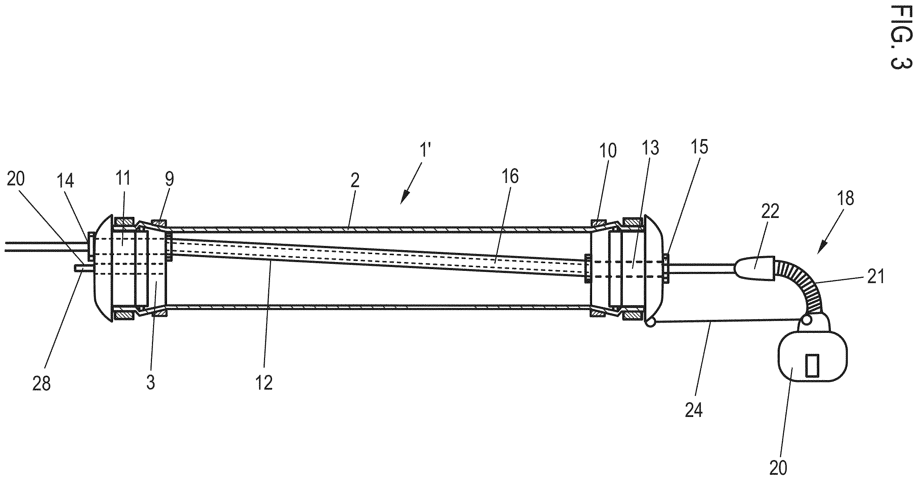

Fig. 3 zeigt ein gegenüber Fig. 1 und Fig. 2 leicht modifiziertes Ausführungsbeispiel eines Packers 1', bei dem der Einfachheit halber sich entsprechende Komponenten mit denselben Bezugszeichen bezeichnet sind. Im Gegensatz zum Packer 1, wo die Durchführungsöffnungen 11 und 13 zentral vorgesehen sind, ist die Durchführungsöffnung 11 hier radial außen vorgesehen und der Druckmittelanschluss 27 zentral, um ein einfacheres Drehen und Schieben/Ziehen mittels des Bedienmittels zu erlauben. Das Durchführelement 12 verläuft mithin unter einem Winkel zur Längsrichtung, erlaubt aber weiterhin das Verschieben der Zuleitung 16.

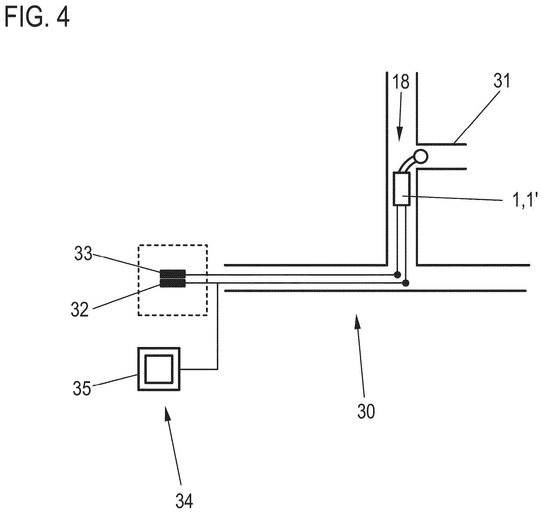

Fig. 4 zeigt schematisch den Packer 1, 1' in einem Rohr- und/oder Kanalsystem 30 an einer Abzweigung 31. Der Bedienabschnitt 32 für die Kameraanordnung 18 wurde nach vorne geschoben, so dass diese in die Abzweigung 31 einragt. Mittels des Bedienmittels 33 kann der Packer 1, 1' dann auch in die Abzweigung 31 geschoben werden. Gezeigt ist zudem eine Ausgabeeinrichtung 34, hier ein Display 35, für Bilder der Kamera 17, welche beispielsweise an der Bedienanordnung mit dem Bedienabschnitt 32 und dem Bedienmittel 33 angeordnet sein kann.

Die Zuleitung 16 kann in allen Ausführungsbeispielen einen Röhrenaal umfassen, in dem die Kabelverbindungen geführt sind. Denkbar ist es alternativ oder zusätzlich, innerhalb des Durchführelements 12 einen Fiberglasstab zu verwenden, der die Kabelverbindungen enthält. Dieser kann über entsprechende Steckverbindungen, insbesondere beidseitig, an weiterführende Versorgungsleitungen angeschlossen sein, beispielsweise sechspolige Steckverbindungen, wenn die Kabelverbindungen 19 für die Kamera 17 und für die UV-LEDs enthalten sind.

## Patentansprüche

1. Packer (1, 1') für die Rohr- und Kanalsanierung, aufweisend einen vorderen und einen hinteren Flansch (4, 3), zwischen denen eine mit einem Druckmittel befüllbare, dehnbare Hülle (2) angeordnet ist, wobei der hintere und der vordere Flansch (3, 4) durch ein hohles Durchführelement (12) innerhalb der Hülle (2), gegen diese abgedichtet, verbundene Durchführungsöffnungen (11, 13) aufweisen, durch die eine Zuleitung (16) zu einer an die Durchführungsöffnung (13) des vorderen Flansches (4) anschließend angeordneten Kameraanordnung (18) mit einer Kamera (17) geführt ist, **dadurch gekennzeichnet, dass** die Kameraanordnung (18) ein in radialer Richtung biegbares Verlängerungselement (21) aufweist, an dessen vorderen Ende die Kamera (17) angeordnet ist, wobei dem Verlängerungselement (21) eine Verstelleinrichtung zur Einstellung von dessen radialer Verbiegung zugeordnet ist, wobei die Zuleitung (16) verschiebbar in dem Durchführelement (12) gelagert ist und die Verstelleinrichtung ein eine von dem vorderen Flansch (4) beanstandete, insbesondere am vorderen Ende des Verlängerungselements (21) angeordnete, erste Befestigungsstelle (25) mit einer zweiten, von der Durchführungsöffnung (13) des vorderen Flanschs (4) radial beabstandeten Befestigungsstelle (26) verbindendes Befestigungsmittel (24) aufweist, wobei das Befestigungsmittel (24) ein Draht und/oder ein reißfester Faden ist.

2. Packer nach Anspruch 1, **dadurch gekennzeichnet, dass** das Verlängerungselement (31) eine dicht gewickelte Feder mit aneinander anschließenden Wicklungen und/oder einen Silikonschlauch umfasst.

3. Packer nach Anspruch 1 oder 2, **dadurch gekennzeichnet, dass** die Kameraanordnung (18) eine Länge von 15 bis 25 cm aufweist.

4. Packer nach einem der vorangehenden Ansprüche, **dadurch gekennzeichnet, dass** die Zuleitung (16) zu einem distalen Bedienabschnitt (32), welcher zumindest teilweise außerhalb des Rohrs oder Kanals anzuordnen ist, verlängert ist.

5. Packer nach einem der vorangehenden Ansprüche, **dadurch gekennzeichnet, dass** an dem hinteren Flansch (3) ein Druckmittelanschluss (27) für das Druckmittel vorgesehen ist, der ein Ankopplungsmittel (28) zum Ankoppeln eines zumindest zur Verdrehung des Packers (1, 1') zu verwendenden Bedienmittels (33) aufweist.

6. Packer nach einem der vorangehenden Ansprüche, **dadurch gekennzeichnet, dass** die Zuleitung einen, Kabelverbindungen (19) zu der Kamera (17) umfassenden, Fiberglasstab innerhalb des Durchführelements (12) aufweist.

7. Packer nach einem der vorangehenden Ansprüche, **dadurch gekennzeichnet, dass** die Steifigkeit des hohlen Durchführelements (12) so gewählt ist, dass der Abstand der beiden Flansche (3, 4) bei Bewegung und/oder Befüllung mit dem Druckmittel zumindest im Wesentlichen konstant bleibt.

## Claims

1. Packer (1, 1') for pipe and sewer rehabilitation, having a front and a rear flange (4, 3) between which an expandable sleeve (2), which is fillable with a pressure medium, is arranged, wherein the rear and front flanges (3, 4) have lead-through openings (11, 13) which are connected by a hollow lead-through element (12) within the sleeve (2) so as to be sealed off with respect thereto and through which a supply line (16) is led to a camera arrangement (18), the latter being arranged so as to follow the lead-through opening (13) of the front flange (4) and having a camera (17), **characterized in that** the camera arrangement (18) has a radially bendable extension element (21) at the front end of which the camera (17) is arranged, wherein the extension element (21) is assigned an adjustment device for setting its radial deflection, wherein the supply line (16) is mounted in a displaceable manner in the lead-through element (12) and the adjustment device has a fastening means (24) connecting a first fastening point (25), which is spaced apart from the front flange (4) and is in particular arranged at the front end of the extension element (21), to a second fastening point (26), which is spaced apart radially from the lead-through opening (13) of the front flange (4), wherein the fastening means (24) is a wire and/or a tear-resistant thread.

2. Packer according to Claim 1, **characterized in that** the extension element (31) comprises a tightly wound spring with windings following one another and/or comprises a silicone tube.

3. Packer according to Claim 1 or 2, **characterized in that** the camera arrangement (18) has a length of 15 to 25 cm.

4. Packer according to one of the preceding claims, **characterized in that** the supply line (16) is extended up to a distal operating section (32) which is to be arranged at least partially outside the pipe or sewer.

5. Packer according to one of the preceding claims, **characterized in that** provision is made at the rear flange (3) of a pressure-medium connection (27) for the pressure medium, which has a coupling means (28) for the coupling of an operating means (33) which is to be used at least for turning the packer (1, 1').

6. Packer according to one of the preceding claims, **characterized in that** the supply line has a fibreglass rod within the lead-through element (12) that comprises cable connections (19) to the camera (17).

7. Packer according to one of the preceding claims, **characterized in that** the stiffness of the hollow lead-through element (12) is selected such that the distance between the two flanges (3, 4) remains at least substantially constant during movement and/or filling with the pressure medium.

## Revendications

1. Packer (1, 1') pour la réhabilitation de tuyaux et de canalisations, présentant un flasque avant et un flasque arrière (4, 3) entre lesquels est agencée une enveloppe extensible (2) apte à être remplie d'un fluide sous pression, les flasques arrière et avant (3, 4), rendus étanches par rapport à l'enveloppe (2) au moyen d'un élément de traversée creux (12) situé à l'intérieur de celle-ci, présentant des ouvertures de passage (11, 13) reliées entre eux, à travers lesquelles un câble d'alimentation (16) est guidé vers un ensemble caméra (18) ayant une caméra (17), agencé à la suite de l'ouverture de passage (13) du flasque avant (4), **caractérisé en ce que** l'ensemble caméra (18) présente un élément de prolongement (21) apte à être plié dans la direction radiale, à l'extrémité avant duquel est agencée la caméra (17), un dispositif de réglage étant associé à l'élément de prolongement (21) pour régler sa flexion radiale, le câble d'alimentation (16) étant monté mobile dans l'élément de traversée (12), et le dispositif de réglage présentant un moyen de fixation (24) reliant un premier point de fixation (25) espacé du flasque avant (4), en particulier agencé à l'extrémité avant de l'élément de prolongement (21), à un deuxième point de fixation (26) espacé radialement de l'ouverture de passage (13) du flasque avant (4), le moyen de fixation (24) étant un fil métallique et/ou un fil résistant à la déchirure.

2. Packer selon la revendication 1, **caractérisé en ce que** l'élément de prolongement (31) comprend un ressort enroulé de manière dense avec des enroulements mutuellement attenants et/ou un tuyau en silicone.

3. Packer selon la revendication 1 ou la revendication 2, **caractérisé en ce que** l'ensemble caméra (18) présente une longueur allant de 15 à 25 cm.

4. Packer selon l'une des revendications précédentes, **caractérisé en ce que** le câble d'alimentation (16) est prolongé jusqu'à une section de commande distale (32) qui doit être agencée au moins partiellement à l'extérieur du tube ou du canal.

5. Packer selon l'une des revendications précédentes, **caractérisé en ce qu'**il est prévu sur le flasque arrière (3) un raccord (27) pour le fluide sous pression, qui présente un moyen de liaison (28) pour relier un moyen de commande (33) à utiliser au moins pour la rotation du packer (1, 1').

6. Packer selon l'une des revendications précédentes, **caractérisé en ce que** le câble d'alimentation comprend une tige en fibre de verre à l'intérieur de l'élément de traversée (12), comprenant des connexions par câble (19) à la caméra (17).

7. Packer selon l'une des revendications précédentes, **caractérisé en ce que** la rigidité de l'élément de traversée creux (12) est choisie de manière à ce que la distance entre les deux flasques (3, 4) reste au moins sensiblement constante lors du mouvement et/ou du remplissage avec le fluide sous pression.
